# EUROPEAN PATENT APPLICATION

(11) **EP 2 845 785 A1**
(43) Date of publication of application: **11.03.2015**
(21) Application number: 14180264.5
(22) Date of filing: 07.08.2014
(51) Int. Cl.: B62B 5/00, B62B 5/06, B62B 3/00

(54) **Hand cart**

(30) Priority: 09.08.2013 JP 2013165979
(71) Applicant: Funai Electric Co., Ltd., Daito-shi, Osaka 574-0013 (JP)
(72) Inventor: Shirakawa, Tomohiro, Daito-shi, Osaka 574-0013 (JP); Arase, Hiroyuki, Daito-shi, Osaka 574-0013 (JP); Tanaka, Hideyuki, Daito-shi, Osaka 574-0013 (JP); Zaitsu, Osamu, Daito-shi, Osaka 574-0013 (JP); Hiraga, Naotake, Daito-shi, Osaka 574-0013 (JP)
(74) Representative: Global IP Europe Patentanwaltskanzlei

(57) **Abstract**

A hand cart includes a handlebar (21), a handlebar holder, a handlebar sensor, and a drive mechanism. The handlebar has a right grip (21R) and a left grip (21L)at ends of the handlebar (21) in a lengthwise direction. The handlebar holder (23) supports the handlebar while permitting displacement of the handlebar (21) relative to the handlebar holder (23) within a specific range. The handle sensor (71) is configured and arranged to sense the displacement of the handlebar (21). The drive mechanism is configured to perform power assist according to sensing result of the handle sensor (71).

## Description

### CROSS-REFERENCE TO RELATED APPLICATIONS

This application claims priority to Japanese Patent Application No. 2013-165979 filed on August 9, 2013. The entire disclosure of Japanese Patent Application No. 2013-165979 is hereby incorporated herein by reference.

### BACKGROUND

### Field of the Invention

The present invention generally relates to a hand cart. More specifically, the present invention relates to a hand cart, such as walking assist carts, strollers, trailers, and wheelchairs.

### Background Information

Hand carts or walking assist carts are known in the art that help elderly people with poor mobility, or people who cannot walk steadily, go outside their homes.

For example, a traveling vehicle with an assist motor is known in the art that moves when a pair of left and right protruding handles that each have a strain gauge are operated, and separate left and right front wheels are rotationally driven by a motor output corresponding to this operation force (see Japanese Unexamined Patent Application Publication No. 2011-31706 (Patent Literature 1), for example). With this traveling vehicle, grip sensors are provided for sensing the grip states of the left and right handles. The vehicle is set to a movable state only when gripping is detected by the right and left sensors and when no strain is sensed by right and left strain gauges, and then moves when strain is sensed by one of the left and right strain gauges, or both.

### SUMMARY

It has been discovered that for the practical implementation of a hand cart with power assist function (e.g., electric assist function), neither a sensing method for sensing the operational intention of the user, nor an electric assist method for reflecting this sensing result in the power assist operation has been established, and there is still room for investigation into making the hand cart easier to operate.

With the vehicle disclosed in Patent Literature 1, the strain gauge is used as the means for sensing the operational force exerted on the handles. Accordingly, the user have to apply considerable operational force (enough operational force to produce strain in the handle base to which the strain gauge is provided) in electrical assist while the vehicle is moving, which could make the vehicle difficult to handle for a person lacking strength (such as an elderly person).

Also, with the vehicle disclosed in Patent Literature 1, the strain gauge is used as the means for sensing the operational force exerted on the handles. Thus, the handles and the main body (i.e., the handle base to which the strain gauge is provided) have an integrated structure or a rigid connection structure. Accordingly, even if the user applies operational force to the handles, the handles do not move under this operational force. Thus, it has been discovered that the tactile feedback to the user is poor, and the vehicle use is not intuitive.

The present invention is conceived in light of the above problem, and it is an object thereof to provide a hand cart that is easy to operate.

In view of the state of the known technology, a hand cart is provided that includes a handlebar, a handlebar holder, a handlebar sensor, and a drive mechanism. The handlebar has a right grip and a left grip at ends of the handlebar in a lengthwise direction. The handlebar holder supports the handlebar while permitting displacement of the handlebar relative to the handlebar holder within a specific range. The handle sensor is configured and arranged to sense the displacement of the handlebar. The drive mechanism is configured to perform power assist according to sensing result of the handle sensor.

Also other objects, features, aspects and advantages of the present disclosure will become apparent to those skilled in the art from the following detailed description, which, taken in conjunction with the annexed drawings, discloses selected embodiments of the hand cart.

### BRIEF DESCRIPTION OF THE DRAWINGS

Referring now to the attached drawings which form a part of this original disclosure:
FIG. 1A is a front elevational view of a walking assist cart in accordance with a first embodiment;
FIG. 1B is a rear elevational view of the walking assist cart;
FIG. 1C is a right side elevational view of the walking assist cart;
FIG. 1D is a left side elevational view of the walking assist cart;
FIG. 1E is a top plan view of the walking assist cart;
FIG. 1F if a bottom view of the walking assist cart;
FIG. 2A is a front elevational view of a handle unit of the walking assist cart;
FIG. 2B is a rear elevational view of the handle unit;
FIG. 2C is a right side elevational view of the handle unit;
FIG. 2D is a left side elevational view of the handle unit;
FIG. 2E is a top plan view of the handle unit;
FIG. 2F is a bottom view of the handle unit;
FIG. 2G is a perspective view of the handle unit;
FIG. 3 is a functional block diagram of the walking assist cart;
FIG. 4 is a simplified plan view of the configuration of a wheel unit and a wheel drive mechanism of the walking assist cart;
FIG. 5 is a functional block diagram of the configuration of the wheel drive mechanism;
FIG. 6 is a perspective view of the handle unit in accordance with the first embodiment;
FIG. 7 is a top plan view of the handle unit in accordance with the first embodiment;
FIG. 8 illustrates diagrams illustrating operations of a handle sensor of the handle unit;
FIG. 9 illustrates correlation diagrams of a handle displacement state, a sensor sensing state, and a motor drive state;
FIG. 10 is a partial top plan view of a modification example of the handle unit;
FIG. 11 is a simplified diagram of a modification example of a handlebar holder;
FIG. 12 is a perspective view of a handle unit of a walking assist cart in accordance with a second embodiment;
FIG. 13 is an exploded perspective view of a neutral holder of the handle unit;
FIG. 14 illustrates vertical cross sections illustrating operations of the neutral holder;
FIG. 15 illustrates top plan views illustrating the operations of the neutral holder;
FIG. 16 is a top plan view of a handle unit of a walking assist cart in accordance with a third embodiment; and
FIG. 17 illustrates diagrams illustrating handlebar shapes of the handlebar.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

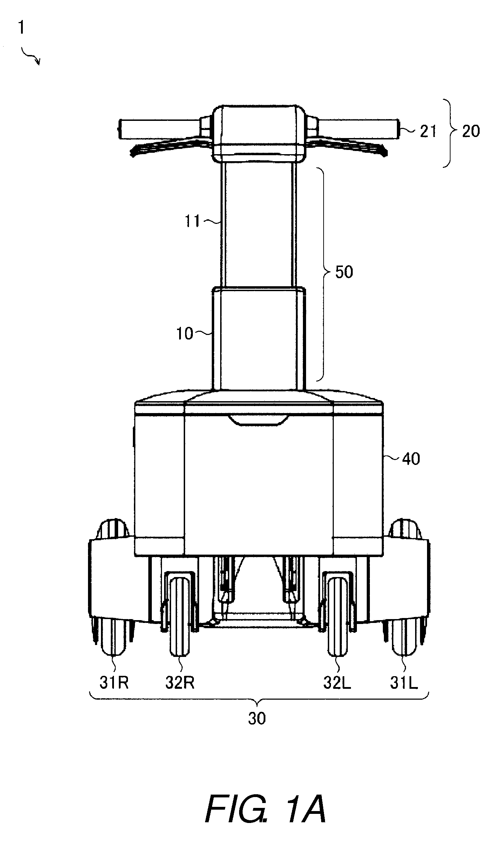

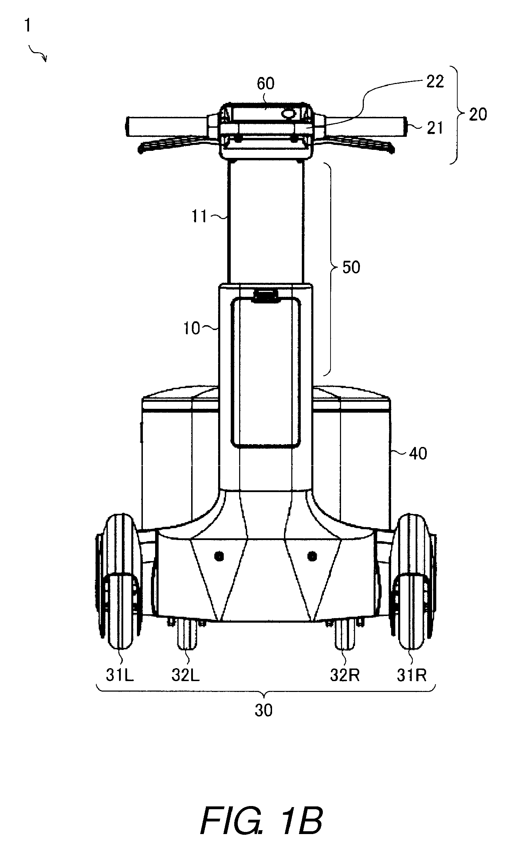

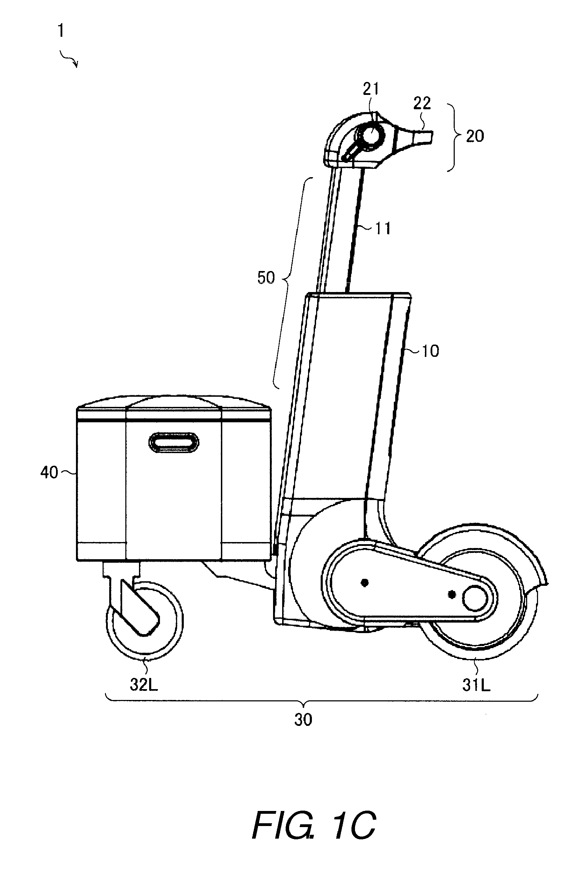

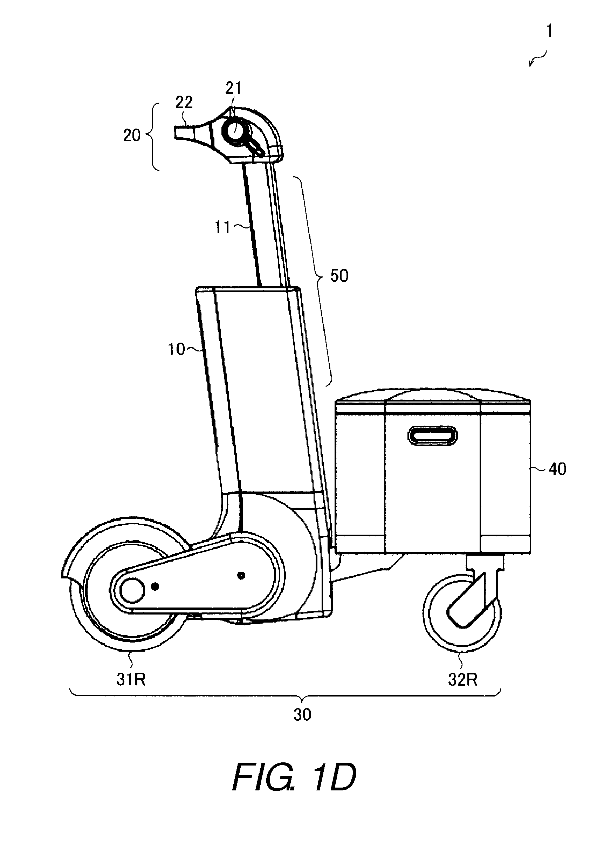

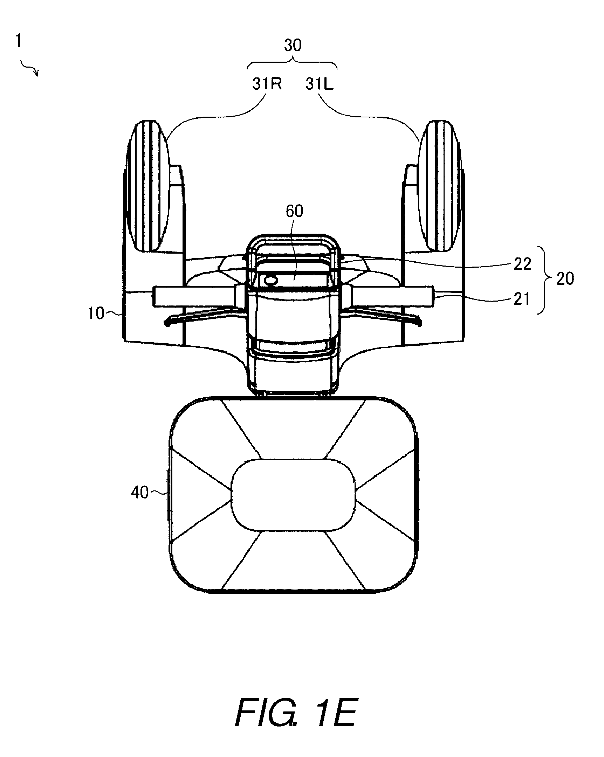

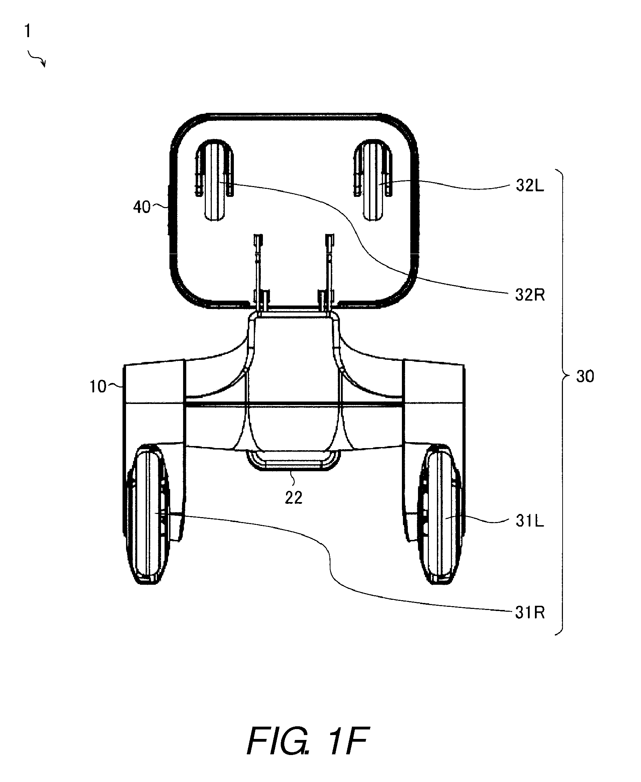

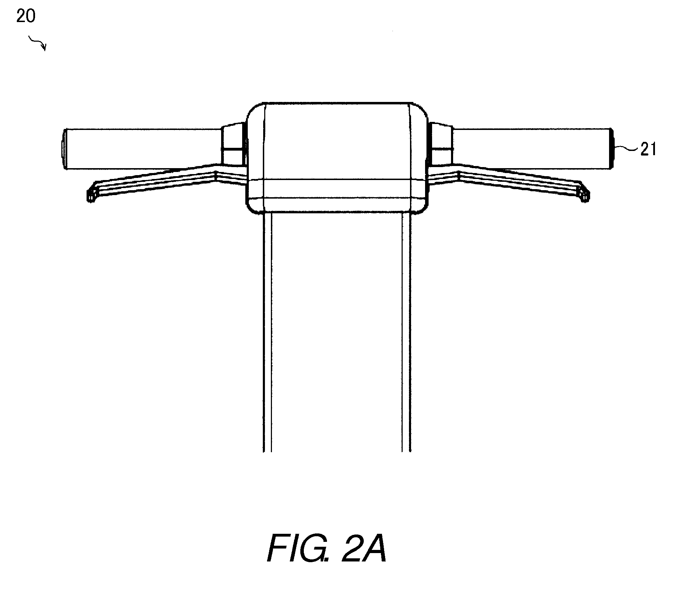

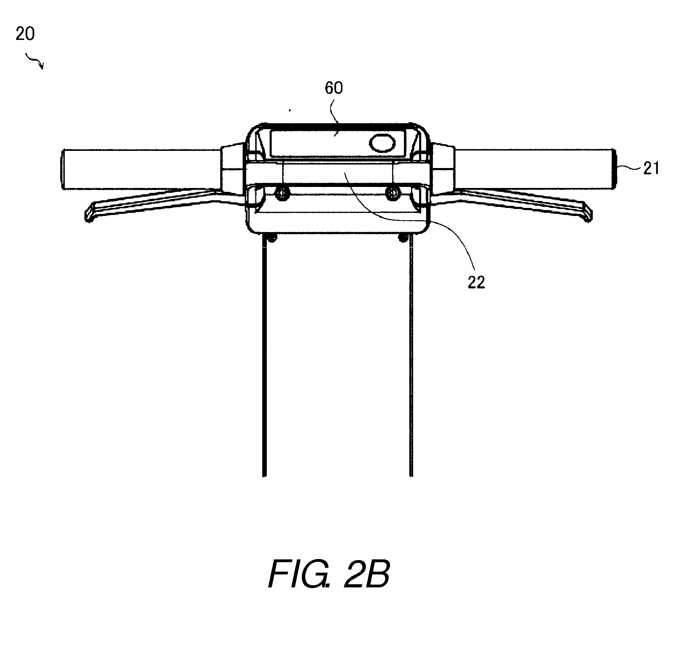

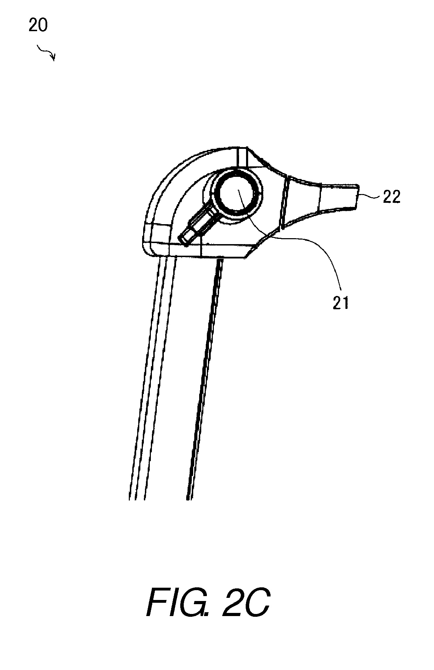

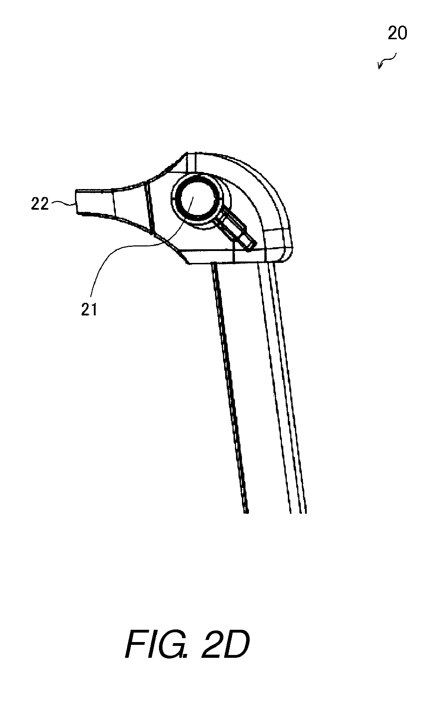

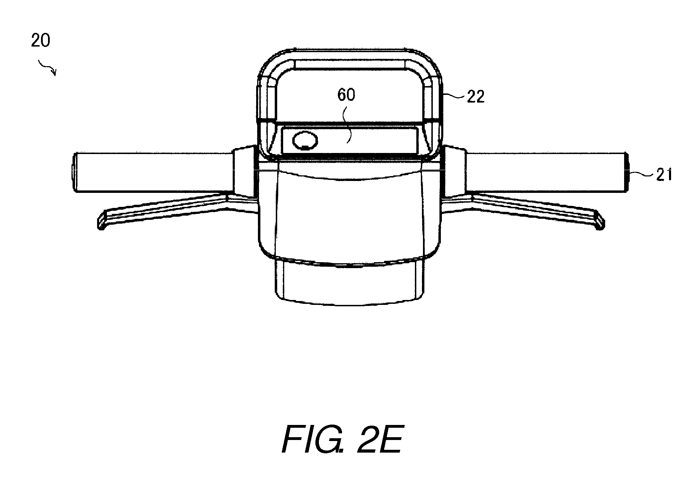

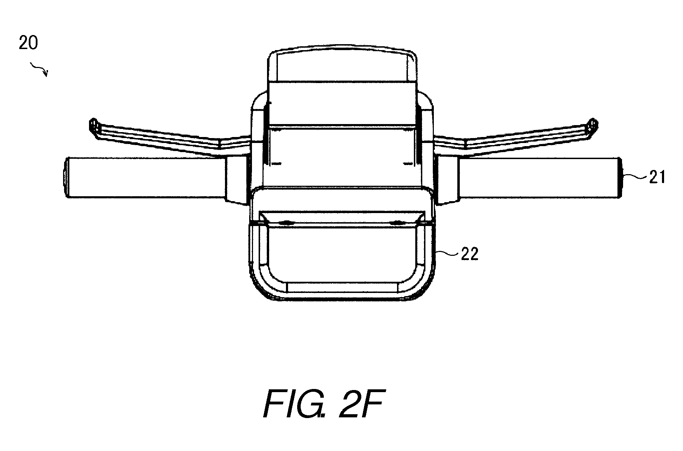

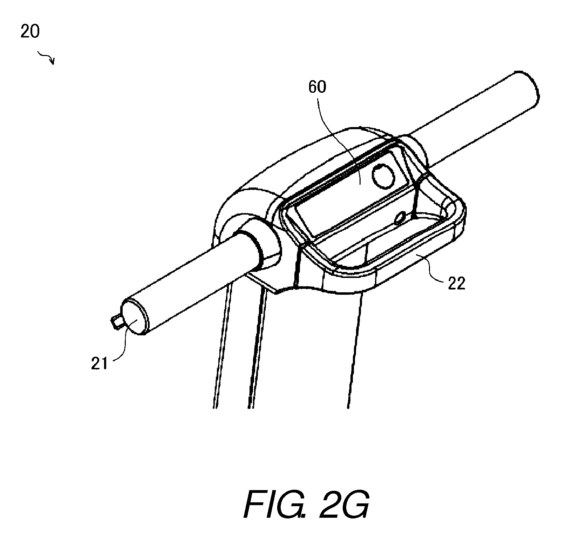

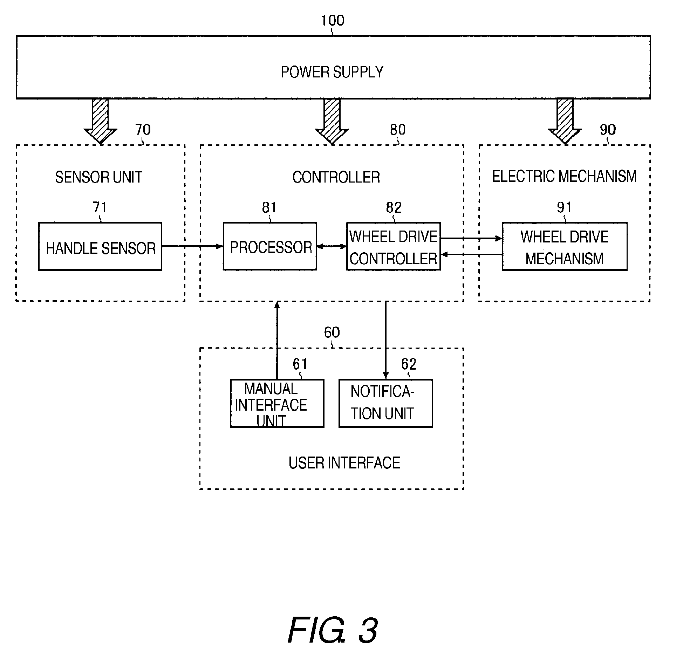

Referring initially to FIGS. 1A to 1F, 2A to 2G, and 3, a walking assist cart 1 (e.g., a hand cart) is illustrated in accordance with a first embodiment. FIGS. 1A to 1F are diagrams of the overall appearance of the walking assist cart 1 (respectively, a front elevational view, a rear elevational view, a right side elevational view, a left side elevational view, a top plan view, and a bottom view). FIGS. 2A to 2G are detail views of a handle unit 20 of the walking assist cart 1 (respectively, a front elevational view, a rear elevational view, a right side elevational view, a left side elevational view, a top plan view, a bottom view, and a perspective view (showing the rear, top, and right side)). FIG. 3 is a functional block diagram of the walking assist cart 1. The walking assist cart 1 in accordance with the first embodiment will now be described in detail through reference as needed to the drawings.

The walking assist cart 1 helps the user (primarily elderly people with limited mobility) to walk, and is a hand cart that is also used as a basket for carrying items or a chair for resting. In the illustrated embodiment, the walking assist cart 1 has a body 10, a handle unit 20, a wheel unit 30, a cargo compartment 40, a backrest 50, a user interface 60, a sensor unit 70, a controller 80, an electric mechanism 90, and a power supply 100. In the illustrated embodiment, a walking assist cart will be explained as an example of the hand cart of the present invention. However, the walking assist cart will be provided for illustration only and not for the purpose of limiting the invention. The present invention can also be equally applied to a hand cart as defined by the appended claims and their equivalents. In particular, examples of the hand cart include the walking assist carts, strollers, push or pull carts, wheeled walkers, wheeled canes, wheelchairs, or other type of manually propelled vehicle. Also, the hand cart is basically a manually propelled device that is pushed or pulled by a person. As mentioned above, the walking assist cart 1 includes the electric mechanism 90. However, the hand cart can also include a prime mover other than the motor, such as an engine, that drives the hand cart. Furthermore, the hand cart basically is a wheeled vehicle with at least one wheel. However, the hand cart can be other types of vehicles, such as tracked vehicles, and so forth.

The body 10 is the chassis (or frame) of the walking assist cart 1. The constituent elements 20 to 100 mentioned above are attached to this body 10. Stainless steel, an aluminum alloy, or the like can be used as the material of the framework that forms the body 10.

The handle unit 20 is gripped by the user while walking, and is linked to a support rod member 11 of the body 10. The user can move the walking assist cart 1 forward or backward, brake it, or turn it right or left either by grasping and manipulating both ends of a handlebar 21, or by grasping and manipulating a center handle 22 with one hand. In addition to the handlebar 21 and the center handle 22, a mechanism for reflecting the intention of the user in electric assist is also incorporated into the handle unit 20, and will be described in detail later.

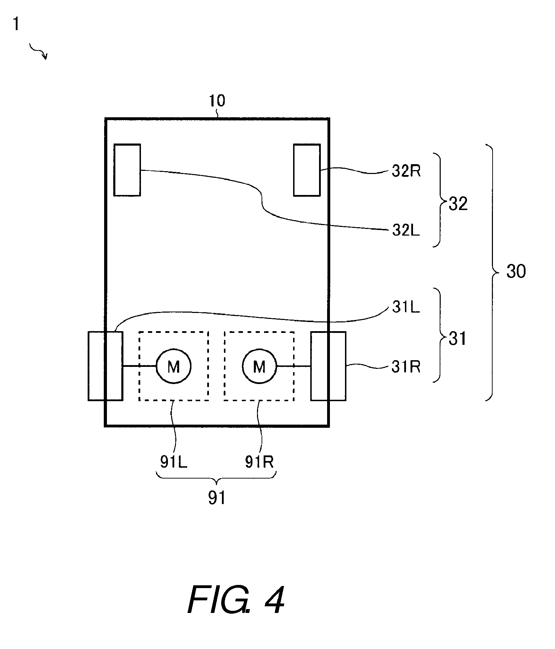

The wheel unit 30 is a wheeled member for moving the body 10 over the ground by rolling to match the walking of the user. FIG. 4 is a simplified plan view of the configuration of the wheel unit 30 and a wheel drive mechanism 91 of the electric mechanism 90. As shown in FIG. 4, the wheel unit 30 has a four-wheel structure including a pair of drive wheels 31 (a left drive wheel 31L and a right drive wheel 31R) rotated around a rotational center axis by human power (or assist power), and a pair of driven wheels 32 (a left driven wheel 32L and a right driven wheel 32R) used for steering. The rotational direction and the rotational speed of the left and right drive wheels 31L and 31R are independently driven and controlled by wheel drive mechanisms 91L and 91R, respectively.

The cargo compartment 40 is a box-shaped member that can hold cargo in its interior. A cushioning member is affixed to the upper lid of the cargo compartment 40, and functions as a seat bottom on which the user can sit.

The backrest 50 is a flat member that allows the user to lean back when seated. In this first embodiment, the support rod member 11 and the body 10 are designed to be relatively wide so that they can also serve as the backrest 50.

The user interface 60 is a means for exchanging information between the user and the controller 80. The user interface 60 includes, for example, a manual interface unit 61 (such as a button for switching an electric assist function on and off) and a notification unit 62 (such as a speaker, a light emitting diode, or a liquid crystal display panel). The user interface 60 is preferably provided at a position where it is easy for the user to manipulate (such as on the handle unit 20 at the eye level of the user).

The sensor unit 70 is a means for monitoring the usage status or surrounding situation of the walking assist cart 1, the walking orientation of the user, and so forth. In this first embodiment, the sensor unit 70 includes a handle sensor 71 that senses the displacement state of the handlebar 21. The configuration and the operation of the handle sensor 71 will be described later in detail.

The controller 80 is a logical circuit (such as a microprocessor) that performs comprehensive control over the user interface 60, the sensor unit 70, and the electric mechanism 90. In particular, the controller 80 includes a processor 81 and a wheel drive controller 82 as functional blocks for achieving the power assist that matches the intention of the user by setting various parameters of the wheel drive mechanism 91 (such as target values for the rotational direction, rotational speed, and torque of the motor) according to the output of the handle sensor 71. The processor 81 determines the drive target values for the left drive wheel 31L and the right drive wheel 31R according to the output of the handle sensor 71. The wheel drive controller 82 individually controls the rotational direction and rotational speed of the left and right drive wheels 31L and 31R according to the above-mentioned drive target values. Specific examples of the functions of the controller 80 will be given later.

In the illustrated embodiment, the controller 80 includes a microprocessor or a microcomputer with a control program that controls various components of the walking assist cart 1. The controller 80 can also include other conventional components such as an input interface circuit, an output interface circuit, and storage devices such as a ROM (Read Only Memory) device and a RAM (Random Access Memory) device. The microcomputer of the controller 80 is programmed to control the various components of the walking assist cart 1. The memory circuit stores processing results and control programs that are run by the microcomputer. The internal RAM of the controller 80 stores statuses of operational flags and various control data. The internal ROM of the controller 80 stores the programs for various operations. The controller 80 is capable of selectively controlling any of the components of the walking assist cart 1 in accordance with the control program. It will be apparent to those skilled in the art from this disclosure that the precise structure and algorithms for the controller 80 can be any combination of hardware and software that will carry out the functions of the present invention.

The electric mechanism 90 is a means for electrically driving the various components of the walking assist cart 1 according to instructions from the controller 80. In this first embodiment, the electric mechanism 90 includes the wheel drive mechanism 91 for electrically driving the wheel unit 30 according to instructions from the controller 80. In particular, in the first embodiment, the left and right wheel drive mechanisms 91L and 91R, such as motors, are provided in order to individually control the left and right drive wheels 31L and 31R (see FIG. 4).

The power supply 100 is a means for supplying power to the user interface 60, the sensor unit 70, the controller 80, and the electric mechanism 90. A secondary battery (such as a lithium ion battery or a nickel hydride battery) that can be removably installed in the body 10 can be used as the power supply 100.

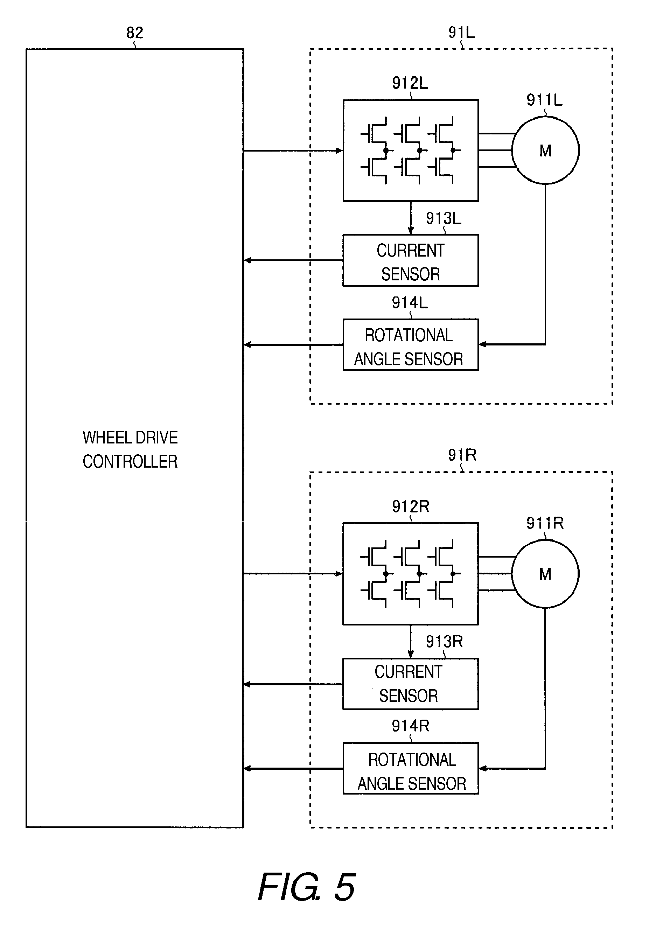

FIG. 5 is a functional block diagram of the configuration of the wheel drive mechanisms 91L and 91R. The wheel drive mechanisms 91L and 91R respectively include motors 911L and 911R, motor drivers 912L and 912R, current sensors 913L and 913R, and rotational angle sensors 914L and 914R.

The motors 911L and 911R respectively provide rotational drive independently to the left drive wheel 31L and the right drive wheel 31R. The motor drivers 912L and 912R are inverter circuits that respectively produce drive current for the motors 911L and 911R according to control signals from the controller 80. The current sensors 913L and 913R respectively sense the drive current flowing to the motors 911L and 911R. The rotational angle sensors 914L and 914R respectively sense the rotational angle of the motors 911L and 911R. The wheel drive controller 82 performs feedback control of the motor drivers 912L and 912R so that the rotational direction and rotational speed of the motors 911L and 911R will match the target values, according to the outputs of the current sensors 913L and 913R and the rotational angle sensors 914L and 914R.

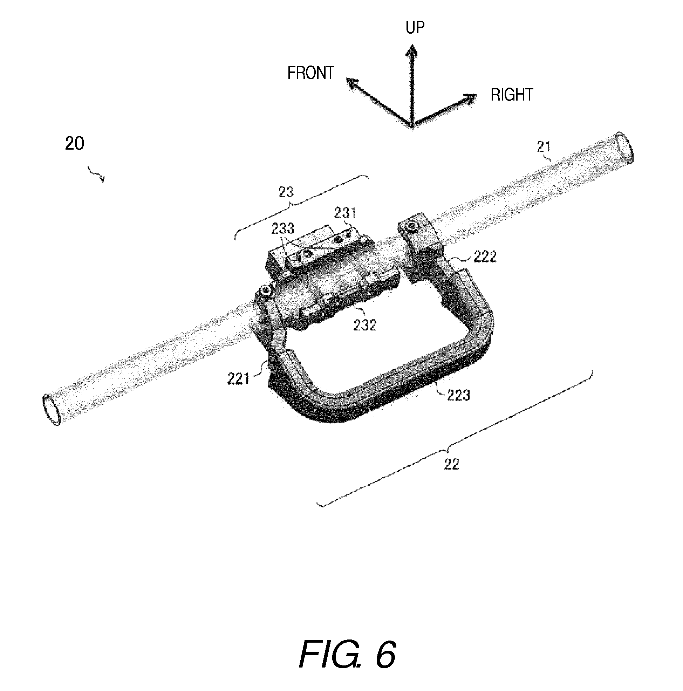

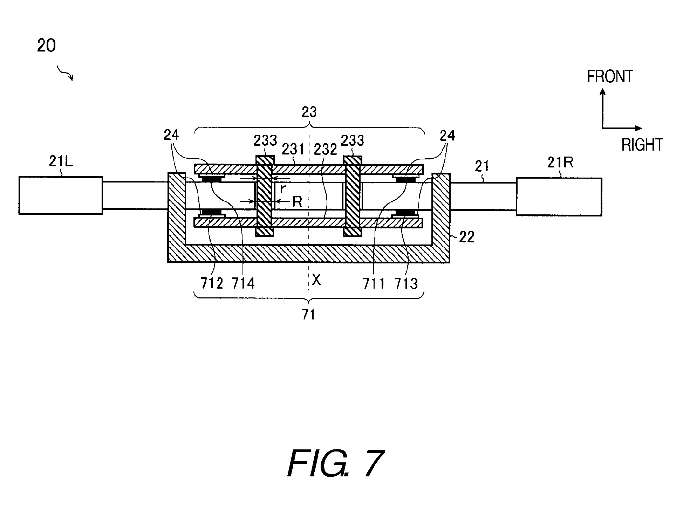

FIGS. 6 and 7 are respectively a perspective view and a top plan view of the handle unit 20 (in a state in which the outer members of the handle unit 20 (see FIGS. 1A to 1F and FIGS. 2A to 2G) have been removed). As shown in these drawings, the handle unit 20 of the first embodiment includes the handlebar 21, the center handle 22, a handlebar holder 23, and neutral holders 24. To make the drawing easier to understand, the handlebar 21 in FIG. 6 is drawn as semitransparent. Also, FIG. 7 is basically drawn as a top plan view of the handle unit 20 as seen from above, but engaged portions of the handlebar 21 and the handlebar holder 23 (mated portions of guide pins 233) are drawn as horizontal cross sections to make the structure thereof easier to comprehend.

The handlebar 21 is a rod-shaped member that is gripped by the user with both hands. The handlebar 21 has a left grip 21L and a right grip 21R at both ends in the lengthwise direction so that the handlebar 21 can be easily gripped by the user with both hands. A pair of guide pin mating holes with diameters R that pass through in the longitudinal direction of the walking assist cart 1 on the left and right sides with respect to the center part in the lengthwise direction (see the broken line X in FIG. 7) are made in the handlebar 21. The handle sensor 71 that senses the displacement state of the handlebar 21 is attached to the surface of the handlebar 21.

The handle sensor 71 includes a first sensor 711, a second sensor 712, a third sensor 713, and a fourth sensor 714.

The first sensor 711 is provided on the front side of a first portion of the handlebar 21 that is closer to the right end than the center part in the lengthwise direction, and senses contact with a first contact face 231 of the handlebar holder 23 (an inside face opposite the front face of the handlebar 21) and thereby senses that the first portion of the handlebar 21 has been displaced in the forward direction from a specific neutral position.

The second sensor 712 is provided on the rear side of a second portion of the handlebar 21 that is closer to the left end than the center part in the lengthwise direction, and senses contact with a second contact face 232 of the handlebar holder 23 (an inside face opposite the rear face of the handlebar 21) and thereby senses that the second portion of the handlebar 21 has been displaced in the rearward direction from the neutral position.

The third sensor 713 is provided on the rear side of the first portion of the handlebar 21 (the opposite position from the first sensor 711), and senses contact with the second contact face 232 and thereby senses that the first portion of the handlebar 21 has been displaced in the rearward direction from the neutral position.

The fourth sensor 714 is provided on the front side of the second portion of the handlebar 21 (the opposite position from the second sensor 712), and senses contact with the first contact face 231 and thereby senses that the second portion of the handlebar 21 has been displaced in the forward direction from the neutral position.

The first to fourth sensors 711 to 714 are all pressure-sensitive conductive elements that convert changes in pressure into changes in electrical resistance. However, the first to fourth sensors 711 to 714 are not limited to being pressure-sensitive conductive elements, and can instead, for example, be mechanical switches, or can be optical sensors that sense the proximity between the handlebar 21 and the handlebar holder 23.

The center handle 22 is a U-shaped member that can be gripped by the user with one hand. As shown in FIG. 6, the center handle 22 includes a pair of linking components 221 and 222 and a center grip 223. First ends of the linking components 221 and 222 are rigidly connected to the handlebar 21 at two places (positions sandwiching the handlebar holder 23) that are closer to the center of the handle bar 21 in the lengthwise direction than the left and right grips 21L and 21R, respectively. The second ends of the linking components 221 and 222 both extend to the user side (rear face side), and the center grip 223 is integrally formed so as to link them together.

Thus, the center handle 22 is rigidly connected between two points sandwiching the center part of the handlebar 21 in the lengthwise direction. Therefore, the operational force exerted on the center grip 223 is transmitted through the linking components 221 and 222 to the handlebar 21. Accordingly, even in a situation in which the user cannot operate the handlebar 21 with both hands (such as when the user is holding an umbrella in one hand), the user can still move the walking assist cart 1 forward or backward, brake, or turn left or right by operating the center handle 22 with one hand.

The handlebar holder 23 is fixed to the support rod member 11 of the body 10, and supports the handlebar 21 while permitting displacement of the handlebar 21 within a specific range. The handlebar holder 23 includes the two guide pins 233 with diameters r, which are supported at both ends by the first contact face 231 and the second contact face 232, as members for supporting the handlebar 21. The guide pins 233 mate with the guide pin mating holes in the handlebar 21. Therefore, the displacement of the handlebar 21 is basically limited to just the axial direction (longitudinal direction) of the guide pins 233.

The diameter R of the guide pin mating holes of the handlebar 21 is set slightly larger than the diameter r of the guide pins 233. Specifically, intentional mating looseness is set in the handlebar holder 23. Therefore, upon receiving user operational force, the handlebar 21 is not just displaced in the forward direction and rearward direction, but is also displaced in the left and right turning direction within a specific range (within the range of play resulting from mating looseness).

The neutral holders 24 are members that bias the handlebar 21 to return to its neutral position. In the illustrated embodiment, elastic members are provided as the neutral holders 24 between the handlebar 21 and the handlebar holder 23. More specifically, the elastic members are provided at the places where the first to fourth sensors 711 to 714 contact with the first contact face 231 and the second contact face 232. Various kinds of sponges or rubber whose hardness can be selected, or metals or plastics having elasticity (such as leaf springs), or the like can be used favorably as elastic members. If the first to fourth sensors 711 to 714 themselves are elastic members, then the elastic members need not be provided at the places where they individually contact.

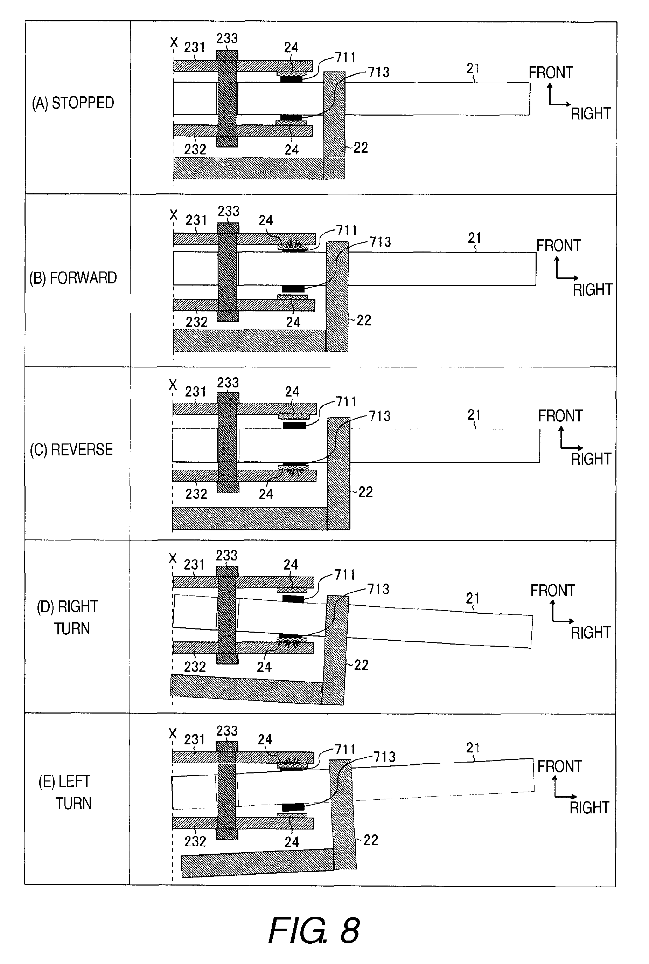

FIG. 8 illustrates diagrams illustrating operations of the handle sensor 71 of the handle unit 20. Starting from the top in the drawing, (A) shows when the walking assist cart is stopped, (B) during forward movement, (C) during rearward movement, (D) during turning to the right, and (E) during turning to the left. In FIG. 8, for the sake of convenience, only the half to the right of the center part of the handlebar 21 in the lengthwise direction (see the broken line X) is depicted, and the left half is omitted.

When the walking assist cart 1 is stopped as shown in (A) of FIG. 8, the neutral holders 24 hold the handlebar 21 in its neutral position. Therefore, contact with the first contact face 231 and the second contact face 232 is not sensed for any of the first to fourth sensors 711 to 714. The first to fourth sensors 711 to 714 are in touching with very light pressure on the neutral holders 24 (e.g., the elastic members) when the walking assist cart 1 is stopped (A). However, this slight contact can be ignored by appropriately setting a threshold used in contact determination.

When the walking assist cart 1 is moved forward as shown in (B) of FIG. 8, the user pushes the handlebar 21 in the forward direction. Then, both the first sensor 711 and the fourth sensor 714 sense contact with the first contact face 231.

When the walking assist cart 1 is moved rearward as shown in (C) of FIG. 8, the user pulls the handlebar 21 in the rearward direction. Then, both the second sensor 712 and the third sensor 713 sense contact with the second contact face 232.

When the walking assist cart 1 is turned to the right as shown in (D) of FIG. 8, the user turns the handlebar 21 in the right turn direction (e.g., the clockwise direction). Then, the third sensor 713 senses contact with the second contact face 232, and the fourth sensor 714 senses contact with the first contact face 231.

When the walking assist cart 1 is turned to the left as shown in (E) of FIG. 8, the user turns the handlebar 21 in the left turn direction (e.g., the counterclockwise direction). Then, the first sensor 711 senses contact with the first contact face 231, and the second sensor 712 senses contact with the second contact face 232.

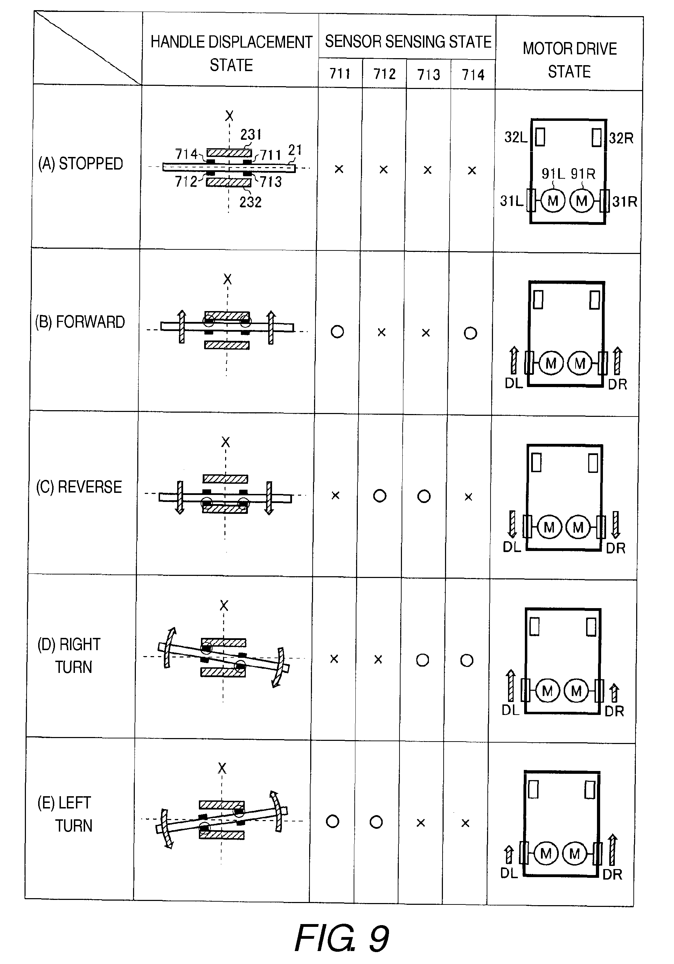

FIG. 9 illustrates correlation diagrams of a handle displacement state, a sensor sensing state, and a motor drive state. Just as in FIG. 8 above, starting at the top of the drawing, (A) shows when the walking assist cart is stopped, (B) during forward movement, (C) during rearward movement, (D) during turning to the right, and (E) during turning to the left.

When the walking assist cart 1 is stopped as shown in (A) of FIG. 9, all of the first sensor to fourth sensors 711 to 714 are in a state of not sensing contact (x). In this case, the controller 80 sets various parameters for the wheel drive mechanisms 91L and 91R so that the walking assist cart 1 will slow down or stop.

When the walking assist cart 1 is moved forward as shown in (B) of FIG. 9, the first sensor 711 and the fourth sensor 714 are in a state of sensing contact (○), while the second sensor 712 and the third sensor 713 are in a state of not sensing contact (x). In this case, the controller 80 sets various parameters for the wheel drive mechanisms 91L and 91R so that the same forward torque is imparted as drive forces DL and DR to the drive wheels 31L and 31R. This electric assist allows the user to move the walking assist cart 1 forward safely and with ease.

When the walking assist cart 1 is moved rearward as shown in (C) of FIG. 9, unlike during forward movement as shown in (B), the first sensor 711 and the fourth sensor 714 are in a state of not sensing contact (x), while the second sensor 712 and the third sensor 713 are in a state of sensing contact (○). In this case, the controller 80 sets various parameters for the wheel drive mechanisms 91L and 91R so that the same rearward torque is imparted as drive forces DL and DR to the drive wheels 31L and 31R. This electric assist allows the user to move the walking assist cart 1 rearward safely and with ease.

When the walking assist cart 1 is turned to the right as shown in (D) of FIG. 9, the first sensor 711 and the second sensor 712 are in a state of not sensing contact (x), while the third sensor 713 and the fourth sensor 714 are in a state of sensing contact (○). In this case, the controller 80 sets various parameters for the wheel drive mechanisms 91L and 91R so that different forward torque (DL > DR (i.e., the drive force DL is larger than the drive force DR) is imparted as the drive forces DL and DR to the drive wheels 31L and 31R. This electric assist allows the user to turn the walking assist cart 1 to the right safely and with ease.

When the walking assist cart 1 is turned to the left as shown in (E) of FIG. 9, unlike during turning to the right as shown in (D), the first sensor 711 and the second sensor 712 are in a state of sensing contact (○), while the third sensor 713 and the fourth sensor 714 are in a state of not sensing contact (x). In this case, the controller 80 sets various parameters for the wheel drive mechanisms 91L and 91R so that different forward torque (DL < DR (i.e., the drive force DL is smaller than the drive force DR)) is imparted as the drive forces DL and DR to the drive wheels 31L and 31R. This electric assist allows the user to turn the walking assist cart 1 to the left safely and with ease.

In FIG. 9, whether there is contact or non-contact between the handlebar 21 and the handlebar holder 23 is sensed digitally (binarily), and the motor drive state is switched according to this sensing result. However, the method for reflecting the displacement of the handlebar 21 in the electric assist is not limited to this, and it is also possible to sense the contact pressure between the handlebar 21 and the handlebar holder 23 as an analog value, and increase or decrease the electric assist force accordingly.

A pressure distribution sensor that senses two-dimensional pressure distribution can be used as the handle sensor 71, and the configuration can be such that the displacement state of the handlebar 21 is sensed from the pressure distribution in the lengthwise direction of the handlebar 21.

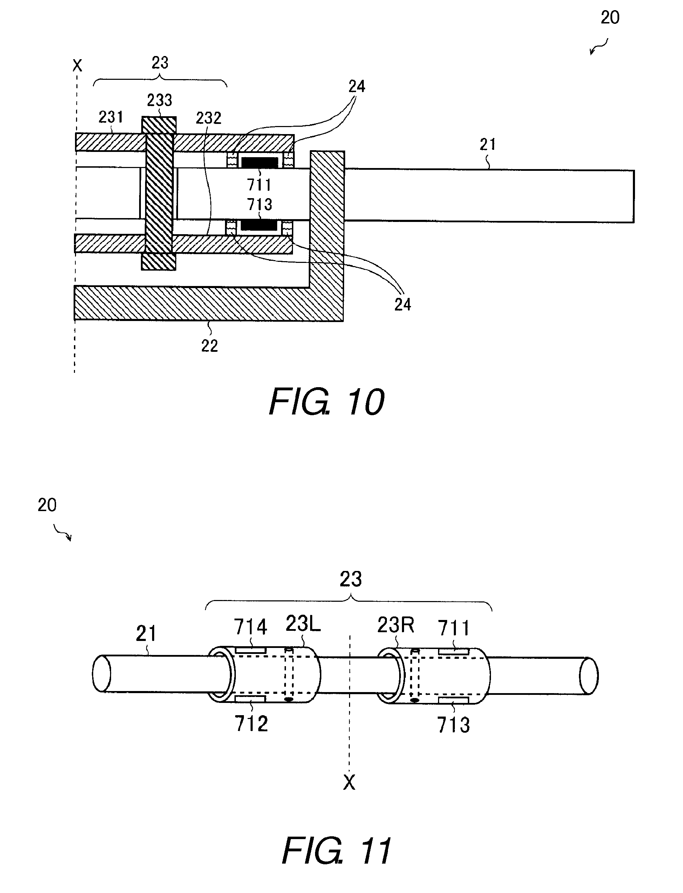

FIG. 10 is a partial top plan view of a modification example of the handle unit 20. In particular, FIG. 10 illustrates a modification example of the neutral holders 24 (e.g., the elastic members), and only shows a left half of the modification example. In this modification example, the neutral holders 24 (e.g., the elastic members) are formed so as to individually surround the first to fourth sensors 711 to 714. With this configuration, in a state in which the handlebar 21 is held in its neutral position, the first to fourth sensors 711 to 714 do not contact with any member, so contact determination (and in turn determination of the displacement of the handlebar 21) can be performed more reliably.

FIG. 11 is a simplified diagram of a modification example of the handlebar holder 23. In FIGS. 6 to 10, an example is given in which just one handlebar holder 23 is provided in the center part of the handlebar 21 in the lengthwise direction. However, the configuration of the handlebar holder 23 is not limited to this, and as shown in FIG. 11, two handlebar holders 23L and 23R can be separately provided to the left and right sides of the center part in the lengthwise direction.

Also, in FIGS. 6 to 10, an example is given in which the handle sensor 71 is provided on the handlebar 21 side. However, the position of the handle sensor 71 is not limited to this, and as shown in FIG. 11, the handle sensor 71 can be provided on the handlebar holder 23 side. However, if a separate sensor (such as the grip sensor discussed below) is provided to the handlebar 21 or the center handle 22, providing the handle sensor 71 on the handlebar 21 side is preferable from the standpoint of making it easier to gather together the signal lines that connect the controller 80 and the various sensors.

Also, in FIGS. 6 to 10, an example is given in which four sensors (the first to fourth sensors 711 to 714) are used as the handle sensor 71. However, if priority is given to reducing the number of sensors, either the third sensor 713 or the fourth sensor 714 (or either the first sensor 711 or the second sensor 712) can be omitted, which reduces the number of sensors to three. Also, if a separate grip sensor or the like is used to determine when the walking assist cart 1 has stopped, the number of sensors of the handle sensor 71 can be reduced to two (the first sensor 711 and the second sensor 712 (or the third sensor 713 and the fourth sensor 714)).

As discussed above, the walking assist cart 1 (e.g., the hand cart) in the first embodiment has the handlebar 21 equipped with the left grip 21L and the right grip 21R at the two ends in its lengthwise direction, the handlebar holder 23 that supports the handlebar 21 while permitting displacement of the handlebar 21 within a specific range, the handle sensor 71 that senses the displacement state of the handlebar 21, and the wheel drive mechanism 91 (e.g., the drive mechanism) that performs power assist according to the sensing result of the handle sensor 71. With this configuration, the user can easily and intuitively convey his intention through the handlebar 21 to the wheel drive mechanism 91 (e.g., the drive mechanism), so the walking assist cart 1 (e.g., the hand cart) is easier to operate.

The walking assist cart 1 (e.g., the hand cart) in the first embodiment further has the center handle 22 that is rigidly connected between two points sandwiching the center part of the handlebar 21 in the lengthwise direction. With this configuration, the user can steer the walking assist cart 1 (e.g., the hand cart) easily and safely with one hand.

Also, with the walking assist cart 1 (e.g., the hand cart) in the first embodiment, the handle sensor 71 senses that the handlebar 21 has received an external force and been displaced in the forward direction, the rearward direction, and the left and right turning direction. With this configuration, the steering state (forward, reverse, left turn, right turn, and stop) of the walking assist cart 1 (e.g., the hand cart) can be sensed from the displacement state of the handlebar 21.

Also, with the walking assist cart 1 (e.g., the hand cart) in the first embodiment, the handle sensor 71 includes the first sensor 711 that senses that the first portion which is closer to one end of the handlebar 21 than the center part in the lengthwise direction has been displaced in the forward direction from the specific neutral position, the second sensor 712 that senses that the second portion which is closer to the other end of the handlebar 21 than the center part in the lengthwise direction has been displaced in the rearward direction from the neutral position, and at least one of the third sensor 713 that senses that the first portion of the handlebar 21 has been displaced in the rearward direction from the neutral position and the fourth sensor 714 that senses that the second portion of the handlebar 21 has been displaced in the forward direction from the neutral position. With this configuration, the steering state of the walking assist cart 1 (e.g., the hand cart) can be sensed easily and reliably.

The walking assist cart 1 (e.g., the hand cart) of the first embodiment further has the neutral holders 24 that biases the handlebar 21 to return to the neutral position. With this configuration, the power assist will not be performed unless the handlebar 21 is displaced intentionally by the user, so the walking assist cart 1 (e.g., the hand cart) can be operated more safely.

Also, with the walking assist cart 1 (e.g., the hand cart) of the first embodiment, the neutral holders 24 includes the elastic members provided between the handlebar 21 and the handlebar holder 23. With this configuration, the neutral holders 24 can be realized easily.

### SECOND EMBODIMENT

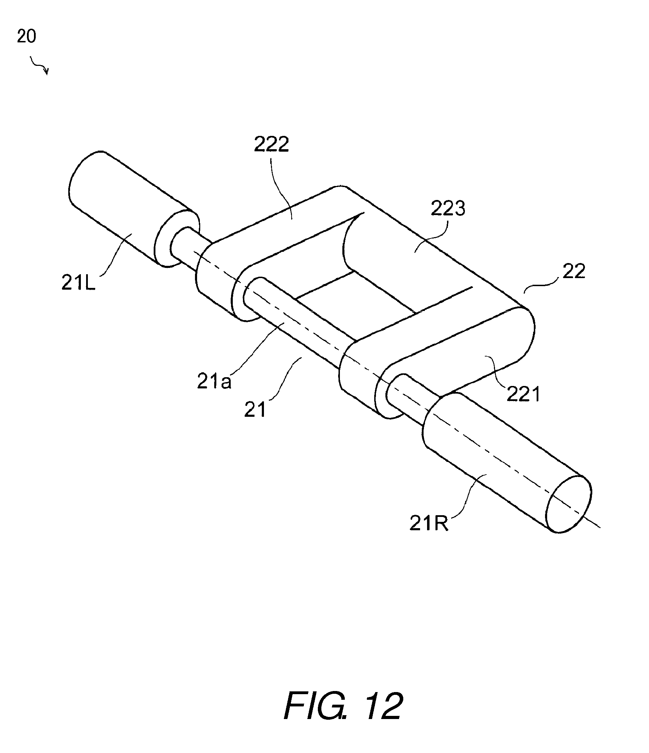

Referring now to FIGS. 12 to 15, a handle unit 20 of a walking assist cart 1 in accordance with a second embodiment will now be explained. In view of the similarity between the first and second embodiments, the parts of the second embodiment that are identical to or functionally similar to the parts of the first embodiment will be given the same reference numerals as the parts of the first embodiment. Moreover, the descriptions of the parts of the second embodiment that are identical to the parts of the first embodiment may be omitted for the sake of brevity.

FIG. 12 is a perspective view of the handle unit 20 of the walking assist cart 1 in accordance with the second embodiment. The handle unit 20 in this second embodiment is configured basically the same as in the first embodiment, and includes a handlebar 21 with left and right grips 21L and 21R at its two ends, and a center handle 22 rigidly connected to the handlebar 21. A characteristic feature of the handle unit 20 in the second embodiment is a neutral holder 25, which is engaged to a center portion 21a (e.g., a lengthwise center portion) of the handlebar 21 in the lengthwise direction of the handlebar 21 as means for holding the handlebar 21 in its neutral position. In view of this, the structure and operation of the neutral holder 25 will now be described in detail.

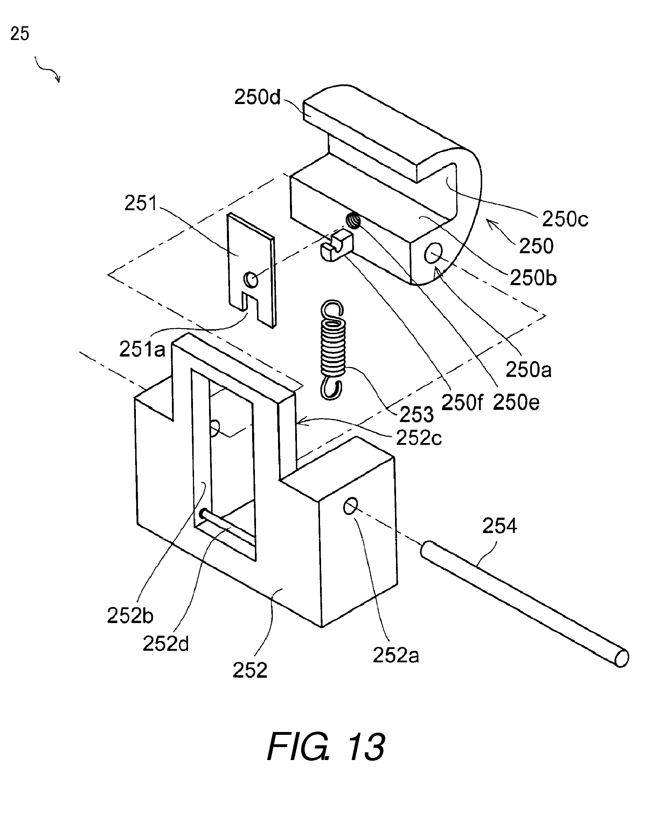

FIG. 13 is an exploded perspective view of the neutral holder 25 that is used in the handle unit 20 of the second embodiment. The neutral holder 25 in the illustrated embodiment includes a receiving member 250, a first biasing member 251, a main body member 252, a second biasing member 253, and a shaft 254.

The receiving member 250 has a U-shaped handlebar insertion component in a cross sectional side view, and holds the handlebar 21 so as to surround it on three sides (a bottom face part 250b, a rear face part 250c, and a lower face side of a contact part 250d). A shaft mating hole 250a is made in the receiving member 250, and the shaft 254 is attached to the main body member 252 as a rotational axle. The receiving member 250 (the open face side of the handlebar insertion component) is provided with a threaded hole 250e for screwing down the first biasing member 251 (e.g., a leaf spring), and a spring hook 250f for latching a first end of the second biasing member 253 (e.g., a tensile spring).

The first biasing member 251 is a flexible elastic member (e.g., the leaf spring, etc.) that is screwed down so as to block off the open face of the handlebar insertion component of the receiving member 250. The first biasing member 251 is provided with a cut-out 251a that engages with the spring hook 250f in order to prevent the rotation of the first biasing member 251 around the threaded hole 250e.

The receiving member 250 and the first biasing member 251 function as a first biasing support that biases and supports the center portion 21a of the handlebar 21 in a first direction (the direction in which the outer peripheral face of the handlebar 21 is pushed against the rear face part 250c).

The shaft mating hole 252a is made in the main body member 252, and supports the receiving member 250 rotatably around the shaft 254. An opening 252b is formed in the main body member 252 in order to avoid interference with the receiving member 250. Also, the main body member 252 has a stopper 252c for holding the biasing of the receiving member 250 by contacting with the contact part 250d of the receiving member 250. The main body member 252 is also provided with a spring bar 252d for latching a second end of the second biasing member 253.

The second biasing member 253 includes an elastic member (e.g., the tensile spring, etc.) that is latched between the spring bar 252d of the main body member 252 and the spring hook 250f of the receiving member 250.

The shaft 254 passes through the shaft mating hole 250a of the receiving member 250 and the shaft mating hole 252a of the main body member 252, and is used as the rotational axle of the receiving member 250.

The main body member 252, the second biasing member 253, and the shaft 254 function as a second biasing support that biases and supports the first biasing support (e.g., the receiving member 250 and the first biasing member 251) in a second direction that is substantially opposite the first direction (the direction in which the handlebar 21 is pulled back to the main body member 252 side around the shaft 254).

The neutral holder 25 in the illustrated embodiment can be fixed to the handlebar holder 23, or the handlebar holder 23 itself can replace the neutral holder 25.

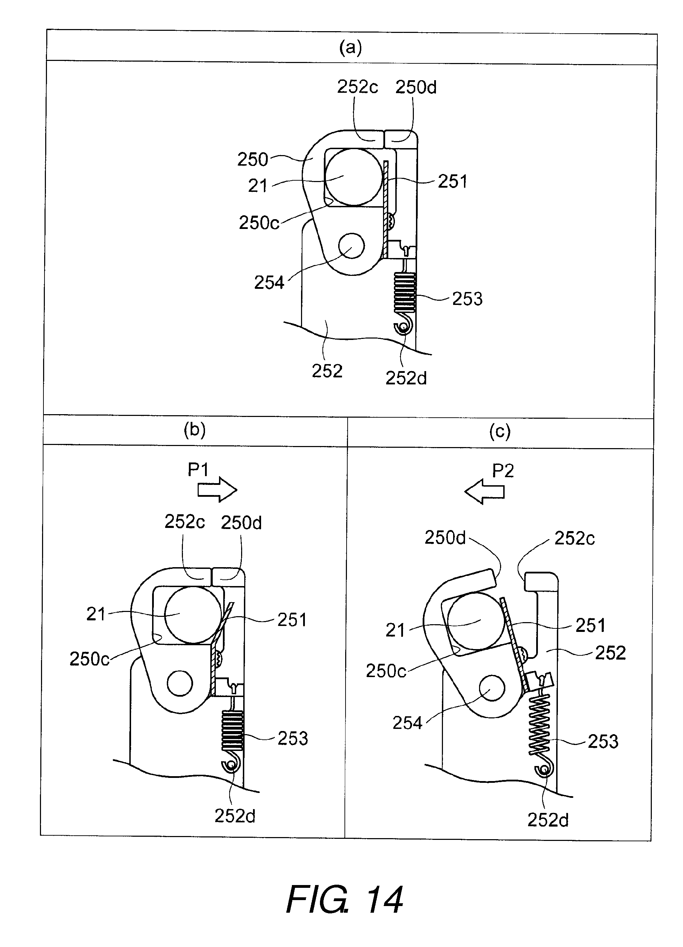

FIG. 14 illustrates vertical cross sections illustrating operations of the neutral holder 25, with (a) showing the situation when the walking assist cart 1 is stopped, (b) during forward movement, and (c) during rearward movement. When no external force is being exerted on the handlebar 21, the handlebar 21 is held in the state shown in (a) of FIG. 14. This state corresponds to a state in which the handlebar 21 is held in the neutral position discussed above.

As shown in (b) of FIG. 14, when the user exerts an operational force P1 in the forward direction on the handlebar 21, the handlebar 21 is displaced in the forward direction against the biasing force of the first biasing member 251. As a result, the handlebar 21 bends the first biasing member 251 away from the rear face part 250c. This state corresponds to a state in which the handlebar 21 has been displaced in the forward direction from the neutral position discussed above.

Conversely, as shown in (c) of FIG. 14c, when the user exerts an operational force P2 in the rearward direction on the handlebar 21, the handlebar 21 hits the rear face part 250c of the receiving member 250, and is displaced in the rearward direction against the biasing force of the second biasing member 252 integrally with the receiving member 250. This state corresponds to a state in which the handlebar 21 has been displaced in the rearward direction from the neutral position discussed above.

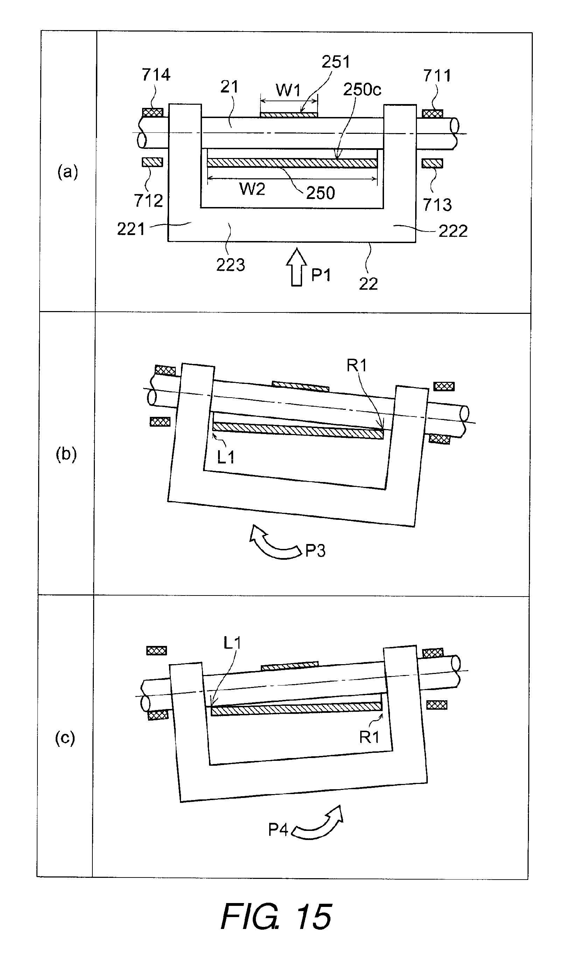

FIG. 15 illustrates top plan views illustrating the operations of the neutral holder 25, with (a) showing the situation when the walking assist cart 1 is moved forward, (b) when turned right, and (c) when turned left. In FIG. 15, an example is shown in which the first to fourth sensors 711 to 714 of the handle sensor 71 are provided not on the handlebar 21 side, but on the handlebar holder 23 side.

As shown in (a) of FIG. 15, if the user exerts the operational force P1 in the forward direction on the handlebar 21 or the center handle 22, the handlebar 21 will bend the first biasing member 251 away from the rear face part 250c as shown in (b) of FIG. 14. In this state, the first sensor 711 and the fourth sensor 714 will sense contact, so electric assist will be performed in the forward direction.

As shown in (b) of FIG. 15, when the user exerts an operational force P3 in the right turn direction on the handlebar 21 or the center handle 22, the handlebar 21 will separate from a left end L1 of the rear face part 250c of the receiving member 250 while staying in contact with a right end R1 of the rear face part 250c of the receiving member 250. Specifically, the handlebar 21 rotates in the right turn direction around the right end R1 of the rear face part 250c. In this state, the third sensor 713 and the fourth sensor 714 will sense contact, so electric assist will be performed in the right turn direction.

Conversely, as shown in (c) of FIG. 15, when the user exerts an operational force P4 in the left turn direction on the handlebar 21 or the center handle 22, the handlebar 21 will separate from the right end R1 of the rear face part 250c of the receiving member 250 while staying in contact with the left end L1 of the rear face part 250c of the receiving member 250. Specifically, the handlebar 21 rotates in the left turn direction around the left end L1 of the rear face part 250c. In this state, the first sensor 711 and the second sensor 712 will sense contact, so electric assist will be performed in the left turn direction.

As discussed above, with the neutral holder 25 in this configuration example, since the fulcrums of the handlebar 21 during the left and right turns are offset to the left and right from the center part in the lengthwise direction, respectively, the left and right turns can be made more easily, with less a lower operational force. In particular, this configuration is extremely effective when the center handle 22 is operated with one hand. As to the relation between the width W1 of the first biasing member 251 and the width W2 of the receiving member 250, it is preferably set to W1 < W2 (i.e., the width W1 is smaller than the width W2).

As discussed above, with the walking assist cart 1 (e.g., the hand cart) in this second embodiment, the neutral holder 25 includes the first biasing support (250 and 251) that biases and supports the handlebar 21 in the first direction, and the second biasing support (252, 253, 254) that biases and supports the first biasing support (250 and 251) in the second direction that is the opposite of the first direction. With this configuration, the handlebar 21 can be held in its neutral position more reliably.

With the walking assist cart 1 (e.g., the hand cart) in the second embodiment, the first biasing support includes the first biasing member 251 that biases the lengthwise direction center portion 21a of the handlebar 21 in the first direction, and the receiving member 250 that is provided on the opposite side from the first biasing member 251 with respect to the handlebar 21. With this configuration, when the handlebar 21 is turned in the left or right turning direction (the counterclockwise or clockwise direction), the handlebar 21 rotates around the left or right end L1 or R1 of the receiving member 250, so the walking assist cart 1 (e.g., the hand cart) can be turned right or left with a lower operational force. This configuration is particularly advantageous in operating the center handle 22.

### THIRD EMBODIMENT

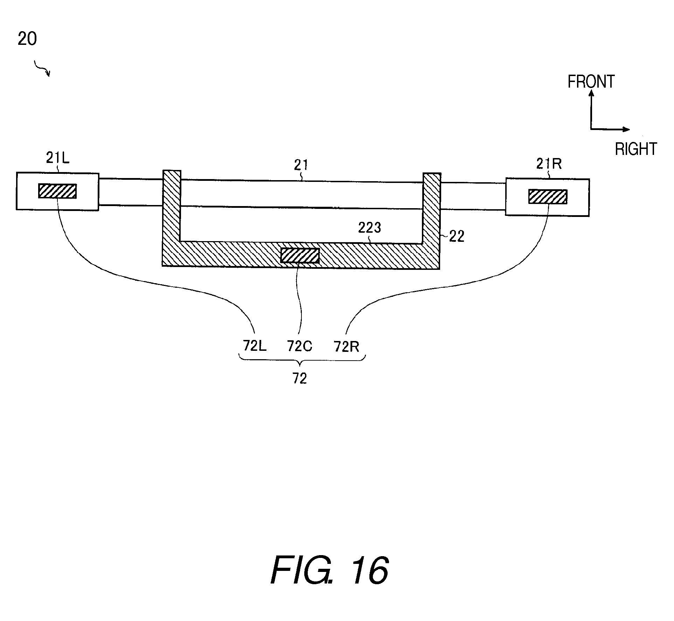

Referring now to FIG. 16, a handle unit 20 of a walking assist cart 1 in accordance with a third embodiment will now be explained. In view of the similarity between the first to third embodiments, the parts of the third embodiment that are identical to or functionally similar to the parts of the first and second embodiments will be given the same reference numerals as the parts of the first and second embodiments. Moreover, the descriptions of the parts of the third embodiment that are identical to the parts of the first and second embodiments may be omitted for the sake of brevity.

FIG. 16 is a top plan view of the handle unit 20 of the walking assist cart 1 in accordance with the third embodiment. The handle unit 20 in the third embodiment includes a grip sensor 72 in addition to a handlebar 21 and a center handle 22. The grip sensor 72 includes a left grip sensor 72L that senses whether or not the left grip 21L is being gripped, a right grip sensor 72R that senses whether or not the right grip 21R is being gripped, and a center grip sensor 72C that senses whether or not the center handle 22 (a center grip 223 of the center handle 22) is being gripped.

The sensing result of the grip sensor 72 is transmitted to the controller 80 and used to determine whether or not electric assist is enabled. To put this in more specific terms, the controller 80 controls the wheel drive mechanism 91 to permit the electric assist when the user is gripping the left and right grips 21L and 21R with both hands or when the user is gripping the center grip 223 with one hand. On the other hand, the controller 80 controls the wheel drive mechanism 91 to prohibit the electric assist when the user is not gripping either the left and right grips 21L and 21R or the center grip 223.

Thus, the walking assist cart 1 (e.g., the hand cart) in the third embodiment further has the grip sensor 72 that senses whether or not the handlebar 21 and the center handle 22 are being gripped, and the wheel drive mechanism 91 (e.g., the drive mechanism) (see FIG. 3) is controlled to allow or not allow the power assist according to the sensing result of the grip sensor 72. With this configuration, since the power assist can be stopped when the user has accidentally removed his hand from the handlebar 21 or the center handle 22, for example, the walking assist cart 1 (e.g., the hand cart) can be operated more safely.

In the above embodiments, the walking assist cart 1 is described as an example, but this is not the only thing to which the present invention can be applied. The present invention can be widely applied to other hand carts (such as strollers, carts, and wheelchairs).

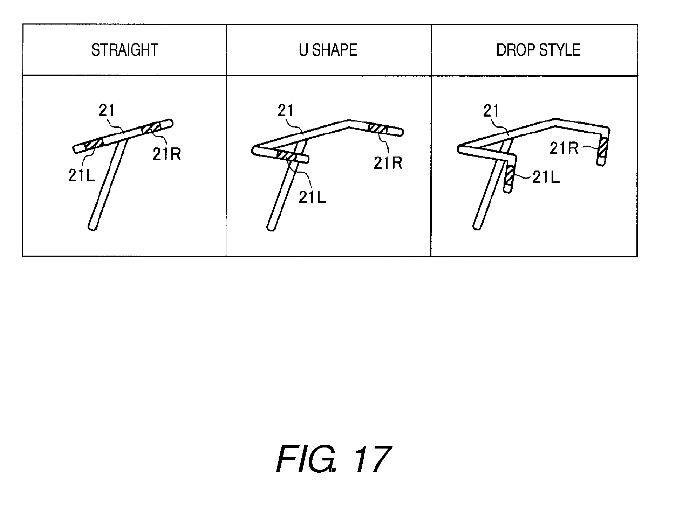

Also, in the above embodiments, the handlebar 21 is illustrated as a straight (or T-shaped) handlebar, but any shape (such as a U shape or a drop style) can be used as long as it is a shape that can be easily manipulated by the user as shown in FIG. 17.

Also, in the above embodiments, both the handlebar 21 and the center handle 22 are provided, but if needed, just one or the other can be provided. For instance, if just the center handle 22 is provided, the portion of the handlebar 21 that extends beyond the linking components 221 and 222 can be omitted (see FIG. 6).

Thus, in addition to the above embodiments, various modifications can be added to the various technological features disclosed in this application, to the extent that they do not depart from the gist of the technological creation thereof. Specifically, it should be understood that the above embodiments are merely examples in every respect, and should not be thought of as being limiting in nature, and the technological scope of the present invention is indicated not by the description of the above embodiments, but by the patent claims, and encompasses all modifications within the meaning and range of equivalency of the claims.

The hand cart disclosed in this application naturally has an overall aesthetic design, but any particular functional portion thereof (such as the center handle) can also serve to enhance the beauty of the vehicle, and can be contrasted as a partial design with the rest of the design.

The present invention can be used to make a hand cart easier to operate.

In the illustrated embodiment, the hand cart has a configuration (first configuration) including a handlebar, a handlebar holder, a handle sensor and a drive mechanism. The handlebar has a right grip and a left grip at ends of the handlebar in a lengthwise direction. The handlebar holder supports the handlebar while permitting displacement of the handlebar relative to the handlebar holder within a specific range. The handle sensor is configured and arranged to sense the displacement of the handlebar. The drive mechanism is configured to perform power assist according to sensing result of the handle sensor. With this configuration, the user can easily and intuitively transmit his intentions through the handlebar to the drive mechanism, and this makes the hand cart easier to operate.

The hand cart with the above first configuration preferably has a configuration (second configuration) further including a center handle that is rigidly coupled to the handlebar at two locations of the handlebar that sandwich a center of the handlebar in the lengthwise direction. With this configuration, the use can steer the hand cart easily and safely with one hand.

The hand cart with the above first or second configuration preferably has a configuration (third configuration) wherein the handle sensor is configured and arranged to sense the displacement of the handlebar in a forward direction, a rearward direction, a left turning direction or a right turning direction of the hand cart due to an external force exerted on the handlebar. With this configuration, the steering state of the hand cart (moving forward, backing up, turning right, turning left, and stopping) can be sensed from the displaced state of the handlebar.

The hand cart with the above third configuration preferably has a configuration (fourth configuration) in which the handle sensor includes a first sensor that is configured and arranged to sense that a first portion of the handlebar that is closer to one end of the handlebar than a center of the handlebar in the lengthwise direction is displaced in a forward direction of the hand cart relative to a neutral position, a second sensor that is configured and arranged to sense that a second portion of the handlebar that is closer to the other end of the handlebar than the center of the handle bar in the lengthwise direction is displaced in a rearward direction of the hand cart relative to the neutral position, and at least one of a third sensor that is configured and arranged to sense that the first portion of the handlebar is displaced in the rearward direction of the hand cart relative to the neutral position, and a fourth sensor that is configured to sense that the second portion of the handlebar is displaced in the forward direction of the hand cart relative to the neutral position. With this configuration, the steering state of the hand cart can be sensed simply and reliably.

The hand cart with the above fourth configuration preferably has a configuration (fifth configuration) further including a neutral holder biasing the handlebar towards the neutral position. With this configuration, as long as the user has not intentionally displaced the handlebar, no unintended power assist will be performed, so the hand cart can be operated more safely.

The hand cart with the above fifth configuration preferably has a configuration (sixth configuration) wherein the neutral holder includes an elastic member disposed between the handlebar and the handlebar holder. With this configuration, a neutral holder can be realized simply.

The hand cart with the above fifth configuration preferably has a configuration (seventh configuration) wherein the neutral holder includes a first biasing holder that biases and holds the handlebar in a first direction, and a second biasing holder that biases and holds the first biasing holder in a second direction that is opposite the first direction. With this configuration, the handlebar can be held in the neutral position more reliably.

The hand cart with the above seventh configuration preferably has a configuration (eighth configuration) wherein the first biasing holder includes a biasing member that biases a lengthwise center portion of the handlebar in the first direction, and a receiving member that is disposed opposite the biasing member with respect to the handlebar. With this configuration, when the handlebar is turned in the left and right turning direction, it rotates around the left and right ends of the receiving member, so the hand cart can be turned left or right with a lower operational force. This configuration is particularly advantageous when operating a center handle.

The hand cart with the above first to eighth configurations preferably has a configuration (ninth configuration) further including a grip sensor that is configured and arranged to sense whether or not the handlebar is being gripped. The drive mechanism is enabled or disabled for the power assist according to sensing result of the grip sensor. With this configuration, the power assist can be stopped in the event that the user removes his hand from the handlebar during movement, for example, so the hand cart can be operated more safely. If a center handle is provided in addition to the handlebar, the power assist will be permitted as long as either the handlebar or the center handle is being gripped, and the power assist will be stopped if neither is being gripped.

The present invention makes it possible to provide a hand cart that is easier to operate.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a walking assist cart in an upright position. Accordingly, these directional terms, as utilized to describe the the walking assist cart should be interpreted relative to a walking assist cart in an upright position on a horizontal surface. The terms "left" and "right" are used to indicate the "right" when referencing from the right side as viewed from the rear of the walking assist cart, and the "left" when referencing from the left side as viewed from the rear of the walking assist cart.

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A hand cart comprising:
a handlebar having a right grip and a left grip at ends of the handlebar in a lengthwise direction;
a handlebar holder supporting the handlebar while permitting displacement of the handlebar relative to the handlebar holder within a specific range;
a handle sensor configured and arranged to sense the displacement of the handlebar; and
a drive mechanism configured to perform power assist according to sensing result of the handle sensor.

2. The hand cart according to claim 1, further comprising
a center handle rigidly coupled to the handlebar at two locations of the handlebar that sandwich a center of the handlebar in the lengthwise direction.

3. The hand cart according to claim 1 or 2, wherein
the handle sensor is configured and arranged to sense the displacement of the handlebar in a forward direction, a rearward direction, a left turning direction or a right turning direction of the hand cart due to an external force exerted on the handlebar.

4. The hand cart according to any one of claims 1 to 3, wherein
the handle sensor includes
a first sensor configured and arranged to sense that a first portion of the handlebar that is closer to one end of the handlebar than a center of the handlebar in the lengthwise direction is displaced in a forward direction of the hand cart relative to a neutral position,
a second sensor configured and arranged to sense that a second portion of the handlebar that is closer to the other end of the handlebar than the center of the handlebar in the lengthwise direction is displaced in a rearward direction of the hand cart relative to the neutral position, and
at least one of a third sensor configured and arranged to sense that the first portion of the handlebar is displaced in the rearward direction of the hand cart relative to the neutral position, and a fourth sensor configured and arranged to sense that the second portion of the handlebar is displaced in the forward direction of the hand cart relative to the neutral position.

5. The hand cart according to any one of claims 1 to 4, further comprising a neutral holder biasing the handlebar towards a neutral position.

6. The hand cart according to claim 5, wherein
the neutral holder includes an elastic member disposed between the handlebar and the handlebar holder.

7. The hand cart according to claim 5 or 6, wherein
the neutral holder includes
a first biasing holder that biases and holds the handlebar in a first direction, and
a second biasing holder that biases and holds the first biasing holder in a second direction that is opposite the first direction.

8. The hand cart according to claim 7, wherein
the first biasing holder includes
a biasing member that biases a lengthwise center portion of the handlebar in the first direction, and
a receiving member that is disposed opposite the biasing member with respect to the handlebar.

9. The hand cart according to any one of claims 1 to 8, further comprising
a grip sensor configured and arranged to sense whether or not the handlebar is being gripped,
the drive mechanism being enabled or disabled for the power assist according to sensing result of the grip sensor.
